(19)

**Europäisches Patentamt**
**European Patent Office**
**Office européen des brevets**

(11) **EP 4 607 786 A1**

(12) **EUROPEAN PATENT APPLICATION**
published in accordance with Art. 153(4) EPC

(43) Date of publication:
**27.08.2025 Bulletin 2025/35**

(21) Application number: **22962747.6**

(22) Date of filing: **20.10.2022**

(51) International Patent Classification (IPC):
***H02P 21/22*** *(2016.01)*

(52) Cooperative Patent Classification (CPC):
**H02P 21/22**

(86) International application number:
**PCT/JP2022/039025**

(87) International publication number:
**WO 2024/084639 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Mobility
Corporation
Tokyo 100-8310 (JP)**

(72) Inventors:
• **TOKURA Yugo
  Tokyo 100-8310 (JP)**
• **FUJIMOTO Chiaki
  Tokyo 100-8310 (JP)**
• **ISHIKAWA Kosuke
  Tokyo 100-8310 (JP)**
• **MATSUSHITA Masaki
  Tokyo 100-8310 (JP)**

(74) Representative: **Hoffmann Eitle
Patent- und Rechtsanwälte PartmbB
Arabellastraße 30
81925 München (DE)**

(54) **MOTOR CONTROL DEVICE AND ELECTRIC POWER STEERING DEVICE**

(57)     A motor control device controls energization of a motor by vector control, the motor control device including: a current command value calculation unit configured to generate current command values in a dq coordinate system based on a command value of a motor; a current command value limit unit configured to limit the current command values in the dq coordinate system which are generated by the current command value calculation unit and output current limit command values which are the limited current command values in the dq coordinate system; and a controller configured to calculate voltage command values for the motor by feedback control of the current limit command values, in which the current command value limit unit limits the current command values in the dq coordinate system such that an operation point having a set voltage margin with respect to a voltage limit circle in the dq coordinate system is obtained based on a direct current bus voltage and the voltage command values.

FIG. 1

**Description**

TECHNICAL FIELD

The present disclosure relates to a motor control device and an electric power steering device.

BACKGROUND ART

In recent years, a technology of suppressing, in a current feedback control of a motor control device, abnormal sounds and vibration of a motor by correcting a current command value such that a voltage is not saturated is known (for example, refer to Patent Document 1). In such a motor control device, by calculating a voltage saturation amount from a target d-axis voltage and a target q-axis voltage, it is possible to appropriately suppress abnormal sounds and vibration of a motor due to voltage saturation even in a case where three-phase modulation or two-phase modulation is performed.

Citation List

Patent Document

Patent Document 1: Japanese Patent No. 6260502

SUMMARY OF INVENTION

Technical Problem

In the above-described motor control device in the related art, in order to suppress voltage saturation, a voltage command value is corrected such that the size of a voltage vector is equal to or smaller than a voltage guard value. That is, in the motor control device in the related art, in a case where the size of the voltage vector exceeds the voltage guard value, the voltage saturation is suppressed by forcibly correcting a shape of the voltage command value to the voltage guard value.

However, in the motor control device in the related art, for example, in a case where a voltage disturbance occurs in the vicinity of the voltage guard value and the voltage command value for suppressing the voltage disturbance exceeds the voltage guard value, the shape of the voltage command value is distorted to be equal to or smaller than the voltage guard value. As a result, it is difficult to suppress the generated voltage disturbance. In the motor control device in the related art, there is a problem in that abnormal sounds and vibration of the motor occur due to the voltage disturbance occurred in such a case.

The present disclosure has been made in order to solve the above-described problem, and an object of the present disclosure is to provide a motor control device and an electric power steering device capable of suppressing abnormal sounds and vibration of a motor due to a voltage disturbance even in a case where a voltage disturbance occurs at an operation point in the vicinity of a limited current command value.

Solution to Problem

In order to solve the above problem, an aspect of the present disclosure provides a motor control device that controls energization of a motor by vector control, the motor control device including: a current command value calculation unit configured to generate current command values in a dq coordinate system based on a command value of a motor; a current command value limit unit configured to limit the current command values in the dq coordinate system which are generated by the current command value calculation unit and output current limit command values which are the limited current command values in the dq coordinate system; and a controller configured to calculate voltage command values for the motor by feedback control of the current limit command values, in which the current command value limit unit limits the current command values in the dq coordinate system such that an operation point having a set voltage margin with respect to a voltage limit circle in the dq coordinate system is obtained based on a direct current bus voltage and the voltage command values.

Further, an aspect of the present disclosure provides an electric power steering device including: the motor control device described above; the motor configured to assist steering of steering; and a torque sensor configured to detect a steering torque of the steering, in which the motor control device controls the motor by using, as a command value of the motor, an assist command of the steering that corresponds to the steering torque detected by the torque sensor.

Advantageous Effects of Invention

According to the present disclosure, it is possible to suppress abnormal sounds and vibration of a motor due to a voltage disturbance even in a case where a voltage disturbance occurs at an operation point in the vicinity of a limited current command value.

BRIEF DESCRIPTION OF DRAWINGS

[FIG. 1] A block diagram showing an example of a motor control device according to a first embodiment.
[FIG. 2] A block diagram showing an example of a current command value limit unit according to the first embodiment.
[FIG. 3] A first diagram for explaining an operation of the motor control device according to the first embodiment.
[FIG. 4] A second diagram for explaining an operation of the motor control device according to the first embodiment.
[FIG. 5] A third diagram for explaining an operation of the motor control device according to the first embodiment.
[FIG. 6] A fourth diagram for explaining an operation of the motor control device according to the first embodiment.
[FIG. 7] A block diagram showing an example of a motor control device according to a second embodiment.
[FIG. 8] A block diagram showing an example of a current command value limit unit according to the second embodiment.
[FIG. 9] A diagram for explaining an operation of a motor control device according to a third embodiment.
[FIG. 10] A block diagram showing an example of an electric power steering device according to a fourth embodiment.
[FIG. 11] A flowchart for explaining an example of an operation of the electric power steering device according to the fourth embodiment.

DESCRIPTION OF EMBODIMENTS

Hereinafter, a motor control device and an electric power steering device according to an embodiment of the present disclosure will be described with reference to the drawings.

[First Embodiment]

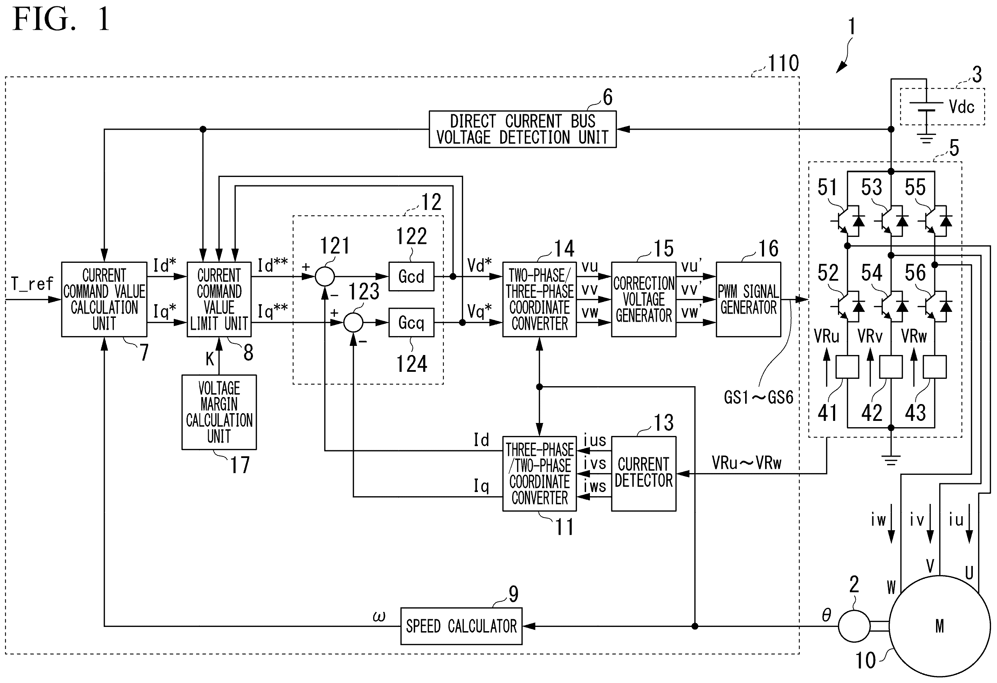

FIG. 1 is a block diagram showing an example of a motor control device 1 according to a first embodiment.
As shown in FIG. 1, the motor control device 1 includes a motor control unit **110,** a motor position detector 2, and an inverter 5.
**In** the motor control device 1, a direct current power supply 3 and a motor 10 are connected to each other, and energization of the motor 10 is controlled by vector control.
The direct current power supply 3 is, for example, a battery, a DC-DC converter, a diode rectifier, a pulse width modulation (PWM) rectifier, or the like, and outputs a direct current bus voltage Vdc to the inverter 5 to be described later. The direct current power supply 3 includes all devices that output a direct current voltage.
The motor 10 is a multi-phase brushless motor, and is, for example, a brushless motor having three-phase windings (U, V, W). The motor 10 is, for example, a permanent magnet synchronous motor, a wound rotor synchronous motor, an induction motor, a chronous reluctance motor, or the like.
The motor position detector 2 detects a motor position θ of the motor 10 using, for example, a resolver, an encoder, an MR sensor, or the like.
The inverter 5 applies an alternating current voltage to the three-phase windings (U, V, W) of the motor 10 based on the direct current bus voltage Vdc output from the direct current power supply 3. The inverter 5 applies a three-phase alternating current voltage to the motor 10 based on switching signals GS1 to GS6, which are control signals.
In addition, the inverter 5 includes switching elements 51 to 56.
Each of the switching elements 51 to 56 is, for example, a semiconductor switch such as an insulated gate bipolar transistor (IGBT), a bipolar transistor, or a metal oxide semiconductor (MOS) power transistor. **In** addition, a diode (or a body diode) is connected in reverse parallel to each of the switching elements 51 to 56.
The switching element 51, the switching element 53, and the switching element 55 are switching elements on an upper arm (high potential side), and the switching element 52, the switching element 54, and the switching element 56 are switching elements on a lower arm (low potential side).
**In** addition, the switching signal GS1, the switching signal GS3, and the switching signal GS5 described above are control signals for turning on and off (performing switching between a conduction state and a non-conduction state) the switching element 51, the switching element 53, and the switching element 55 on the upper arm (high potential side).
**In** addition, the switching signal GS2, the switching signal GS4, and the switching signal GS6 described above are control signals for turning on and off (performing switching between a conduction state and a non-conduction state) the switching element 52, the switching element 54, and the switching element 56 on the lower arm (low potential side).

Each of shunt resistors 41 to 43 connected in series is connected to each of the switching element 52, the switching element 54, and the switching element 56, which are the switching elements on the lower arm.

The shunt resistors 41 to 43 are resistor elements for current detection and output both-end voltages VRu, VRv, and VRw proportional to currents iu, iv, and iw flowing through the motor 10. Here, the both-end voltage VRu, the both-end voltage VRv, and the both-end voltage VRw are represented by Equation (1).

[Math 1]

$$
\left.\begin{array}{l}
VRu = -Ru \times iu \\
VRv = -Rv \times iv \\
VRw = -Rw \times iw
\end{array}\right] \qquad \cdots \quad (1)
$$

Each of the resistance value Ru, the resistance value Rv, and the resistance value Rw indicates each of resistance values of the shunt resistors 41 to 43.

The shunt resistors 41 to 43 output the both-end voltage VRu, the both-end voltage VRv, and the both-end voltage VRw, which are shown in Equation (1), to the motor control unit 110.

In addition, the inverter 5 may be integrated with the motor 10.

The motor control unit 110 receives, as inputs, a torque command T_ref (an example of a command value of the motor 10) which is a control command from the outside, the both-end voltage VRu, the both-end voltage VRv, and the both-end voltage VRw, which are described above, and a motor position θ and outputs the switching signals GS1 to GS6. The motor control unit 110 is, for example, a PWM controller that outputs the switching signals GS1 to GS6 by a discrete time calculator such as a microcomputer or a digital signal processor (DSP).

The motor control unit 110 includes a direct current bus voltage detection unit 6, a current command value calculation unit 7, a current command value limit unit 8, a speed calculator 9, a three-phase/two-phase coordinate converter 11, a controller 12, a current detector 13, a two-phase/three-phase coordinate converter 14, a correction voltage generator 15, a PWM signal generator 16, and a voltage margin calculation unit 17.

The direct current bus voltage detection unit 6 detects a direct current bus voltage Vdc by using, for example, a voltage sensor or a resistance divider. By detecting the direct current bus voltage Vdc by the direct current bus voltage detection unit 6, the motor control unit 110 can perform motor control corresponding to a variation in the direct current bus voltage.

The direct current bus voltage detection unit 6 may output the direct current bus voltage Vdc as a fixed value (for example, Vdc = 12 V) for the purpose of reducing a cost by reducing the number of sensors for detection.

The speed calculator 9 detects a rotational angular velocity ω of the motor 10 based on the motor position θ of the motor 10 that is detected by the motor position detector 2. The speed calculator 9 outputs the rotational angular velocity ω that is detected to the current command value calculation unit 7.

The current command value calculation unit 7 generates current command values (a d-axis current command value Id* and a q-axis current command value Iq*) in a dq coordinate system based on the command value of the motor 10. The current command value calculation unit 7 calculates a q-axis current command value Iq* and a d-axis current command value Id* by using a torque command T_ref which is a control command representing a command value of the motor 10, the direct current bus voltage Vdc detected by the direct current bus voltage detection unit 6, the motor position θ, and the rotational angular velocity ω of the motor 10 that is output by the speed calculator 9.

The voltage margin calculation unit 17 (an example of a voltage margin setting unit) outputs a voltage utilization coefficient K to the current command value limit unit 8 as a value indicating a voltage margin in order to secure a specific voltage margin which is set for a voltage limit circle R1 based on the direct current bus voltage Vdc. Here, the voltage limit circle R1 is a voltage limit circle of the dq coordinate system, and the size of the voltage limit circle R1 is represented by the following Equation (2).

[Math 2]

$$
\text{size of voltage limit circle R1} = \frac{1}{\sqrt{2}} Vdc \quad \cdots (2)
$$

In addition, the voltage margin is defined by the following Equation (3) using the voltage utilization coefficient K.

[Math 3]

$$\text{voltage margin} = \frac{1}{\sqrt{2}} Vdc \times (1 - K), (K: 0 \leq K \leq 1) \quad \cdots (3)$$

The voltage margin calculation unit 17 sets a voltage margin by Equation (3) by setting the voltage utilization coefficient K.

The voltage utilization coefficient K may be, for example, a variable value from 0 to 1. In addition, as shown in Equation (3), the voltage margin is set to be variable according to the direct current bus voltage Vdc. That is, the voltage margin calculation unit 17 sets the voltage margin to be variable by variably changing the voltage utilization coefficient K.

The current command value limit unit 8 limits the current command values (the d-axis current command value Id* or/and the q-axis current command value Iq*) in the dq coordinate system that are generated by the current command value calculation unit 7 and outputs current limit command values (a limited d-axis current command value Id** or/and a limited q-axis current command value Iq**), which are limited current command values in the dq coordinate system. The current command value limit unit 8 limits the current command values (the d-axis current command value Id* and/or the q-axis current command value Iq*) in the dq coordinate system such that an operation point having the set voltage margin with respect to the voltage limit circle R1 in the dq coordinate system is obtained, based on, for example, the direct current bus voltage Vdc detected by the direct current bus voltage detection unit 6, the voltage utilization coefficient K output by the voltage margin calculation unit 17, and the voltage command values (the voltage command value Vd* and the voltage command value Vq*) obtained from the controller 12.

That is, the current command values in the dq coordinate system include the d-axis current command value and the q-axis current command value. The current command value limit unit 8 limits at least one of the d-axis current command value Id* and the q-axis current command value Iq* such that an operation point having the voltage margin with respect to the voltage limit circle R1 is obtained, based on the direct current bus voltage Vdc detected by the direct current bus voltage detection unit 6 and the voltage command values (the voltage command value Vd* and the voltage command value Vq*).

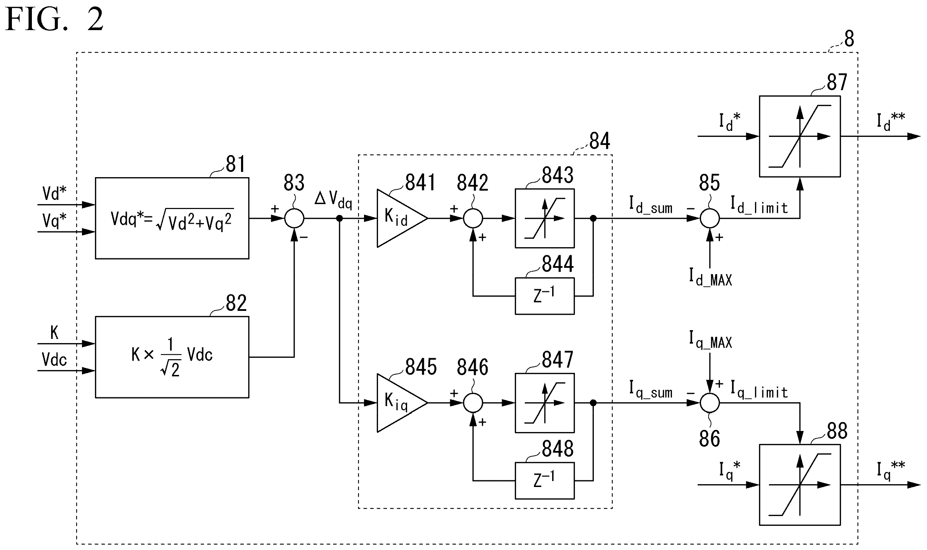

Here, a configuration of the current command value limit unit 8 will be described in detail with reference to FIG. 2.

FIG. 2 is a block diagram showing an example of the current command value limit unit 8 according to the present embodiment.

As shown in FIG. 2, the current command value limit unit 8 includes a dq-axis voltage calculator 81, a limit voltage calculator 82, subtractors (83, 85, and 86), an integrator 84, a current command value limiter 87, and a current command value limiter 88.

The dq-axis voltage calculator 81 calculates a size Vdq* of a composite voltage vector from the voltage command value Vd* and the voltage command value Vq*. The size Vdq* of the composite voltage vector is represented by the following Equation (4).

[Math 4]

$$Vdq* = \sqrt{Vd^2 + Vq^2} \quad \cdots (4)$$

That is, the dq-axis voltage calculator 81 calculates the size Vdq* of the composite voltage vector using Equation (4). The dq-axis voltage calculator 81 outputs the calculated size Vdq* of the composite voltage vector to the subtractor 83.

The limit voltage calculator 82 calculates the size of the voltage limit circle R2 from the voltage utilization coefficient K and the direct current bus voltage Vdc. The voltage limit circle R2 is a voltage limit circle in the dq coordinate system, and the size of the voltage limit circle R2 is represented by the following Equation (5).

[Math 5]

$$\text{size of voltage limit circle R2} = \frac{1}{\sqrt{2}} Vdc \quad \cdots (5)$$

That is, the limit voltage calculator 82 calculates the size of the voltage limit circle R2 using Equation (5). The limit voltage calculator 82 outputs the calculated size of the voltage limit circle R2 to the subtractor 83.

The subtractor 83 calculates a difference (a deviation ΔVdq) between the output of the dq-axis voltage calculator 81 and the output of the limit voltage calculator 82. That is, the subtractor 83 calculates a difference (a deviation ΔVdq) between the size Vdq* of the composite voltage vector and the size of the voltage limit circle R2 and outputs the difference to the integrator 84.

The integrator 84 outputs a d-axis current integration value Id_sum and a q-axis current integration value Iq_sum, which are obtained by integrating the deviation ΔVdq, based on the deviation ΔVdq output by the subtractor 83. The integrator 84 obtains outputs by multiplying the deviation ΔVdq output by the subtractor 83 by an integration gain Kid and an integration gain Kiq in each axis direction of the dq-axis and adds, to the obtained outputs, delay values of the d-axis current integration value Id_sum and the q-axis current integration value Iq_sum that are obtained by feedback. In addition, the integrator 84 performs current limit on the added values to output the d-axis current integration value Id_sum and the q-axis current integration value Iq_sum.

The integrator 84 includes an amplifier 841, an amplifier 845, an adder 842, an adder 846, a current limiter 843, a current limiter 847, a delay element 844, and a delay element 848.

The amplifier 841 amplifies the deviation ΔVdq by the integration gain Kid and outputs the amplified deviation to the adder 842.

The adder 842 adds an output of the delay element 844 and an output of the amplifier 841 and outputs an addition result to the current limiter 843.

The current limiter 843 is a current limiter for the d-axis, performs current limit on the output of the adder 842 by limiting an upper limit to a d-axis current upper limit value Id_MAX and a lower limit to a d-axis current lower limit value Id_MIN, and outputs a d-axis current integration value Id_sum.

In addition, the delay element 844 delays the output (the d-axis current integration value Id_sum) of the current limiter 843 and outputs the delayed output to the adder 842.

As described above, the integrator 84 generates the d-axis current integration value Id_sum obtained by integrating the deviation ΔVdq by the amplifier 841, the adder 842, the current limiter 843, and the delay element 844.

In addition, the amplifier 845 amplifies the deviation ΔVdq by the integration gain Kiq and outputs the amplified deviation to the adder 846.

The adder 846 adds an output of the delay element 848 and an output of the amplifier 845 and outputs an addition result to the current limiter 847.

The current limiter 847 is a current limiter for the q-axis, performs current limit on the output of the adder 846 by limiting an upper limit to a q-axis current upper limit value Iq_MAX and a lower limit to a q-axis current lower limit value Iq_MIN, and outputs a q-axis current integration value Iq_sum.

In addition, the delay element 848 delays the output (the q-axis current integration value Iq_sum) of the current limiter 847 and outputs the delayed output to the adder 846.

As described above, the integrator 84 generates the q-axis current integration value Iq_sum obtained by integrating the deviation ΔVdq by the amplifier 845, the adder 846, the current limiter 847, and the delay element 848.

The subtractor 85 calculates a difference between the d-axis current upper limit value Id_MAX of the dq-axis and the d-axis current integration value Id_sum output by the integrator 84 and outputs the difference as the d-axis current limit value Id_limit to the current command value limiter 87.

The subtractor 86 calculates a difference between the q-axis current upper limit value Iq_MAX of the dq-axis and the q-axis current integration value Iq_sum output by the integrator 84 and outputs the difference as the q-axis current limit value Iq_limit to the current command value limiter 88.

The current command value limiter 87 limits the d-axis current command value Id* based on the d-axis current limit value Id_limit output by the subtractor 85 and outputs a limited d-axis current command value Id**. In a case of limiting the d-axis current command value Id*, the current command value limiter 87 limits an upper limit to the d-axis current limit value Id_limit and a lower limit to the d-axis current lower limit value Id_MIN.

The current command value limiter 88 limits the q-axis current command value Iq* based on the q-axis current limit value Iq_limit output by the subtractor 86 and outputs a limited q-axis current command value Iq**. In a case of limiting the q-axis current command value Iq*, the current command value limiter 88 limits an upper limit to the q-axis current limit value Iq_limit and a lower limit to a negative value (-Iq_limit) of the q-axis current limit value Iq_limit.

Returning to the description of FIG. 1, the current detector 13 detects detection currents (ius, ivs, iws) by using voltages (VRu, VRv, VRw) at both ends of the shunt resistors (41, 42, 43), which are connected in series to each of the switching elements (52, 54, 56) of the lower arm of the inverter 5, and the switching signals GS1 to GS6. The current detector 13 outputs the detection currents (ius, ivs, iws) that are detected to the three-phase/two-phase coordinate converter 11.

The three-phase/two-phase coordinate converter 11 converts the detection currents into dq-axis coordinates based on the detection currents (ius, ivs, iws) detected by the current detector 13 and the motor position θ detected by the motor position detector 2 and calculates a d-axis detection current Id and a q-axis detection current Iq. The three-phase/two-phase coordinate converter 11 outputs the calculated d-axis detection current Id and the calculated q-axis detection current Iq to the controller 12.

The controller 12 calculates voltage command values (a voltage command value Vd* and a voltage command value Vq*) on the dq-axis for the motor 10 by performing feedback control on the current limit command values (the limited d-axis current command value Id** and the limited q-axis current command value Iq**). The controller 12 calculates a voltage command value Vd* and a voltage command value Vq* based on, for example, the limited d-axis current command value Id**, the limited q-axis current command value Iq**, the d-axis detection current Id, and the q-axis detection current Iq.

In addition, the controller 12 includes a subtractor 121, a subtractor 123, a d-axis controller 122, and a q-axis controller 124.

The subtractor 121 calculates a deviation (a d-axis current deviation) between the voltage command value Vd* output by the current command value limit unit 8 and the d-axis detection current Id. The subtractor 121 outputs the deviation (the d-axis current deviation) to the d-axis controller 122.

The subtractor 123 calculates a deviation (a q-axis current deviation) between the voltage command value Vq* output by the current command value limit unit 8 and the q-axis detection current Iq. The subtractor 123 outputs the deviation (the q-axis current deviation) to the q-axis controller 124.

The d-axis controller 122 calculates a voltage command value Vd* such that the d-axis current deviation is "0" (zero) by using a control method such as P control or **PI** control. The d-axis controller 122 outputs the calculated voltage command value Vd* to the current command value limit unit 8 and the two-phase/three-phase coordinate converter 14.

The q-axis controller 124 calculates a voltage command value Vq* such that the q-axis current deviation is "0" (zero) by using a control method such as P control or PI control. The q-axis controller 124 outputs the calculated voltage command value Vq* to the current command value limit unit 8 and the two-phase/three-phase coordinate converter 14.

The two-phase/three-phase coordinate converter 14 performs coordinate conversion based on the voltage command value Vd*, the voltage command value Vq*, and the motor position θ detected by the motor position detector 2 and calculates voltage command values (a u-phase voltage command value vu, a v-phase voltage command value vv, and a w-phase voltage command value vw) on the three-phase coordinates. The two-phase/three-phase coordinate converter 14 outputs the calculated voltage command values (the u-phase voltage command value vu, the v-phase voltage command value vv, and the w-phase voltage command value vw) on the three-phase coordinates to the correction voltage generator 15.

The correction voltage generator 15 generates correction voltage command values (a u-phase correction voltage command value vu', a v-phase correction voltage command value vv', and a w-phase correction voltage command value vw') by equally adding an offset voltage Voffset to the three-phase voltage command values including the u-phase voltage command value vu, the v-phase voltage command value vv, and the w-phase voltage command value vw, which are output by the two-phase/three-phase coordinate converter 14, the offset voltage Voffset being for switching to a modulation method capable of improving the voltage utilization ratio by (2/3$^{1/2}$) times. The correction voltage generator 15 outputs the generated correction voltage command values (the u-phase correction voltage command value vu', the v-phase correction voltage command value vv', and the w-phase correction voltage command value vw') to the PWM signal generator 16.

Since the modulation method capable of improving the voltage utilization ratio by adding the offset voltage Voffset by the correction voltage generator 15 is a known technique, a description thereof will be omitted here.

In addition, in a case where the motor control unit 110 does not include the correction voltage generator 15, the limit voltage calculator 82 shown in FIG. 2 may calculate the size of the voltage limit circle R2 by the following Equation (6).

[Math 6]

$$\text{size of voltage limit circle } R2 = K \times \frac{\sqrt{3}}{2\sqrt{2}} \times Vdc \quad \cdots (6)$$

The PWM signal generator 16 generates switching signals GS1 to GS6 for driving the inverter 5 based on the correction voltage command values (the u-phase correction voltage command value vu', the v-phase correction voltage command value vv', and the w-phase correction voltage command value vw') output by the correction voltage generator 15. The PWM signal generator 16 outputs the switching signals GS1 to GS6, which are control signals by PWM control, to the inverter 5.

Next, an operation of the motor control device 1 according to the present embodiment will be described with reference to the drawings.

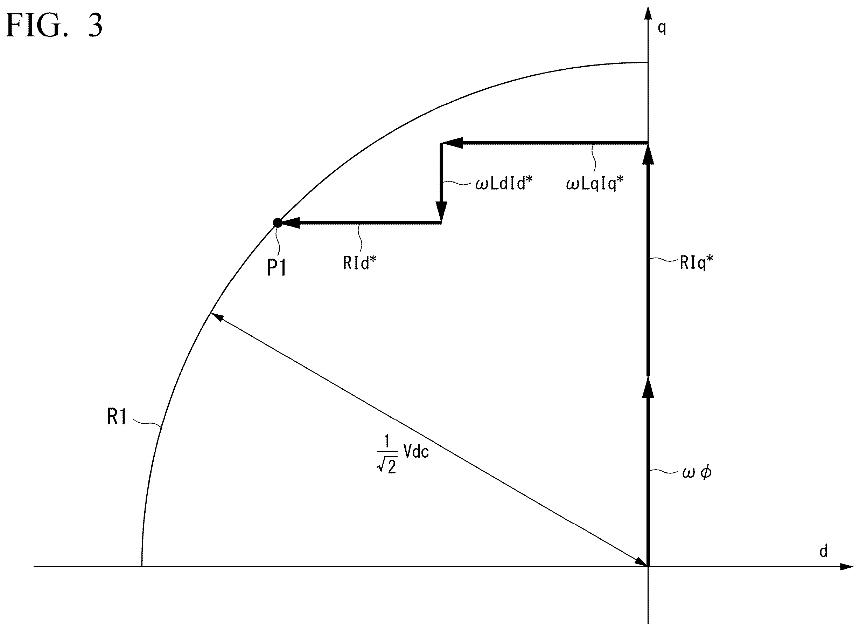

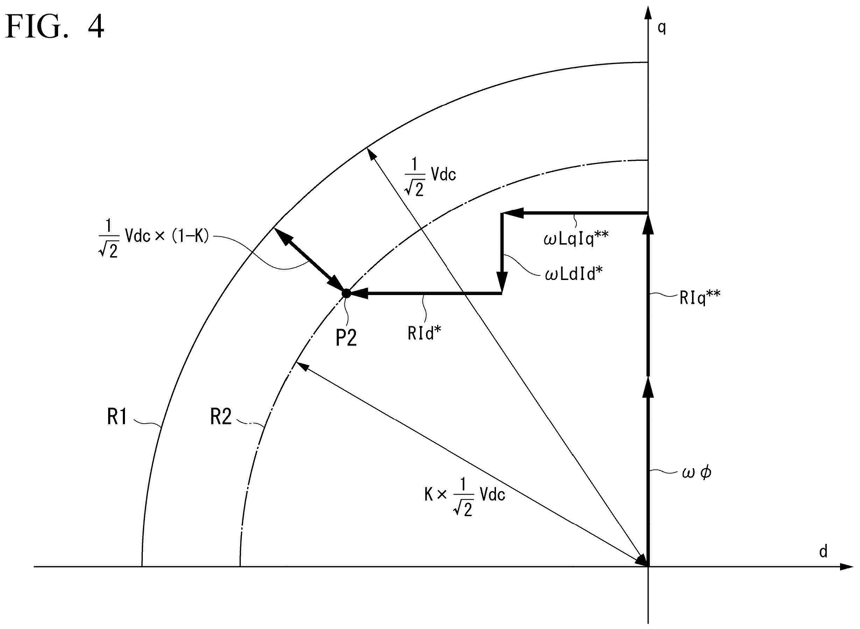

FIG. 3 and FIG. 4 are diagrams for explaining an example of an operation of the motor control device 1 according to the present embodiment. FIG. 3 and FIG. 4 show phase diagrams based on a known voltage equation of a motor, and for simple description, a state in which the current command value limit is performed for each axis is assumed.

The phase diagram shown in FIG. 3 shows an operation point P1 at which the current command value limit is not performed. In addition, the phase diagram shown in FIG. 4 shows an operation point P2 in a case where the q-axis current command value Iq* is limited to the limited q-axis current command value Iq** such that an operation point having the set voltage margin is obtained from the operation point P1 of FIG. 3. As can be seen from a comparison between both diagrams shown in FIG. 3 and FIG. 4, by limiting the q-axis current command value Iq* to the limited q-axis current command value Iq**, vectors of terms (ωLqIq*, RIq*) related to the q-axis current command value Iq* are reduced.

As described above, in the motor control device 1 according to the present embodiment, the operation point can be changed from the operation point P1 to the operation point P2 by limiting the q-axis current command value Iq* to the limited q-axis current command value Iq**, and an operation point having the set voltage margin can be obtained.

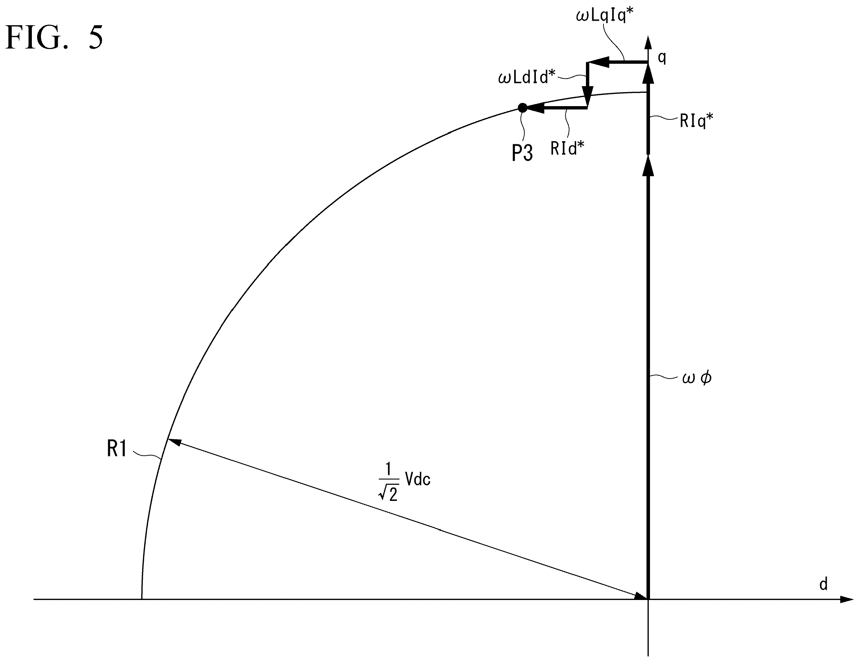

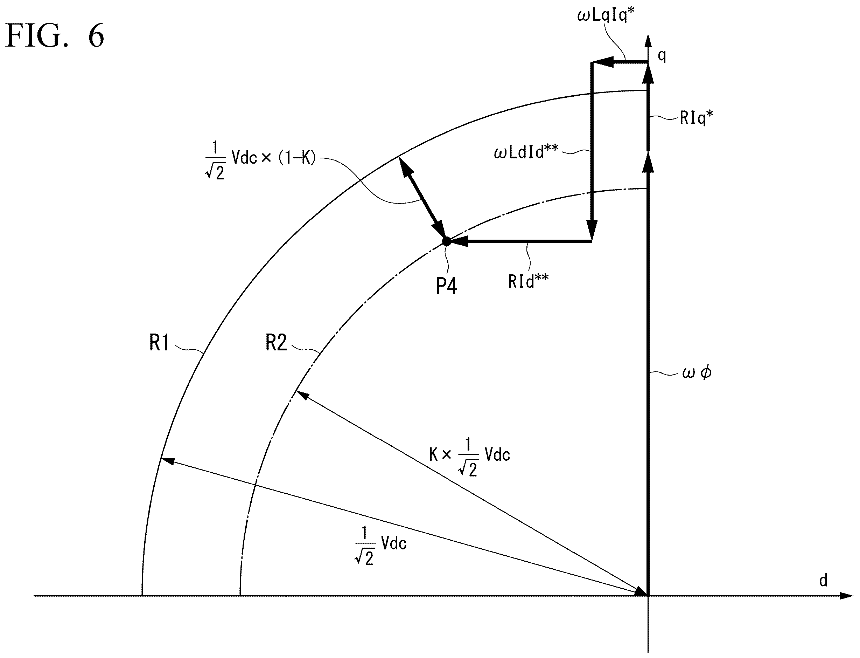

In addition, FIG. 5 and FIG. 6 are diagrams for explaining another example of an operation of the motor control device 1 according to the present embodiment. FIG. 5 and FIG. 6 show phase diagrams based on a known voltage equation of a motor, and for simple description, a state in which the current command value limit is performed for each axis is assumed.

The phase diagram shown in FIG. 5 shows an operation point P3 at which the current command value limit is not performed. In addition, the phase diagram shown in FIG. 6 shows an operation point P4 in a case where the d-axis current command value Id* is limited to the limited d-axis current command value Id** such that an operation point having the set voltage margin is obtained from the operation point P3 shown in FIG. 5. As can be seen from a comparison between FIG. 5 and FIG. 6, by limiting the d-axis current command value Id* to the limited d-axis current command value Id**, vectors of the terms (ωLdId*, RId*) related to the d-axis current command value Id* are extended.

As described above, in the motor control device 1 according to the present embodiment, the operation point can be changed from the operation point P3 to the operation point P4 by limiting the d-axis current command value Id* to the limited d-axis current command value Id**, and an operation point having the set voltage margin can be obtained.

In the motor control device 1 according to the present embodiment, the operation point may be changed by performing limitation not only on one of the d-axis and the q-axis as described above but also on both the d-axis and the q-axis. In this case, the change of the operation point is a combination of FIG. 4 and FIG. 6 described above.

As described above, the motor control device 1 according to the present embodiment is a motor control device that controls energization of the motor 10 by vector control and includes the current command value calculation unit 7, the current command value limit unit 8, and the controller 12. The current command value calculation unit 7 generates the current command values (the d-axis current command value Id* and the q-axis current command value Iq*) in the dq coordinate system based on the command value (for example, the torque command T_ref) of the motor 10. The current command value limit unit 8 limits the current command values (the d-axis current command value Id* and the q-axis current command value Iq*) in the dq coordinate system that are generated by the current command value calculation unit 7 and outputs current limit command values (a limited d-axis current command value Id** and a limited q-axis current command value Iq**), which are limited current command values in the dq coordinate system. The controller 12 calculates voltage command values (a voltage command value Vd* and a voltage command value Vq*) for the motor 10 by performing feedback control on the current limit command values (the limited d-axis current command value Id** and the limited q-axis current command value Iq**). The current command value limit unit 8 limits the current command values (the d-axis current command value Id* and/or the q-axis current command value Iq*) in the dq coordinate system such that an operation point having the set voltage margin with respect to the voltage limit circle R1 in the dq coordinate system is obtained, based on the direct current bus voltage Vdc and the voltage command values (the voltage command value Vd* and the voltage command value Vq*).

Thereby, the motor control device 1 according to the present embodiment limits the current command values (the d-axis current command value Id* and the q-axis current command value Iq*) such that an operation point having the voltage margin with respect to the voltage limit circle R1 is obtained. Therefore, voltage saturation does not occur within a range of the voltage margin from the operation point. In addition, even in a case where a voltage disturbance occurs at an operation point in the vicinity of the limited current command value, the motor control device 1 according to the present embodiment secures a fluctuation width as the voltage margin without performing correction for setting an operation point to be equal to or lower than a voltage guard value as in the related art. Therefore, in the motor control device 1 according to the present embodiment, it is possible to maintain a shape of the voltage command value that can suppress the generated voltage disturbance. As a result, even in a case where a voltage disturbance occurs at an operation point in the vicinity of the limited current command value, the motor control device 1 according to the present embodiment can suppress not only voltage saturation but also abnormal sounds and vibration of the motor due to the voltage disturbance.

In addition, the motor control device 1 according to the present embodiment includes the direct current bus voltage detection unit 6 that detects the direct current bus voltage Vdc. The current command values in the dq coordinate system include the d-axis current command value Id* and the q-axis current command value Iq*. The current command value limit unit 8 limits at least one of the d-axis current command value Id* and the q-axis current command value Iq* such that an operation point having the voltage margin with respect to the voltage limit circle R1 is obtained, based on the direct current bus voltage Vdc detected by the direct current bus voltage detection unit 6 and the voltage command values (the voltage command value Vd* and the voltage command value Vq*).

Thereby, the motor control device 1 according to the present embodiment limits at least one of the d-axis current command value Id* and the q-axis current command value Iq* based on the direct current bus voltage Vdc. Therefore, it is possible to appropriately correspond to a case where the direct current bus voltage Vdc is changed and suppress abnormal sounds and vibration of the motor due to a voltage disturbance.

In addition, in the present embodiment, the controller 12 outputs, as the voltage command values, the voltage command values (the voltage command value Vd* and the voltage command value Vq*) in the dq coordinate system. The current command value limit unit 8 limits at least one of the d-axis current command value and the q-axis current command value according to the deviation ΔVdq between a calculated value, which is calculated based on the direct current bus voltage Vdc, a value K indicating the voltage margin, and the size of a voltage vector indicated by the voltage command values (the voltage command value Vd* and the voltage command value Vq*) in the dq coordinate system.

Thereby, the motor control device 1 according to the present embodiment can suppress abnormal sounds and vibration of the motor due to the voltage disturbance by a simple method using the voltage command values in the dq coordinate system (the voltage command value Vd* and the voltage command value Vq*) as the voltage command values.

In addition, in the present embodiment, the current command value limit unit 8 limits at least one of the d-axis current command value and the q-axis current command value according to the integration value of the deviation ΔVdq.

Thereby, the motor control device 1 according to the present embodiment performs limit using the integration value. Therefore, it is possible to suppress a sudden change in the current limit command values (the limited d-axis current command value Id** and the limited q-axis current command value Iq**) and more appropriately suppress abnormal sounds and vibration of the motor 10.

In addition, the motor control device 1 according to the present embodiment includes the voltage margin calculation unit 17 (the voltage margin setting unit) that sets the voltage margin to be variable. The current command value limit unit 8 limits the current command values in the dq coordinate system based on the voltage margin which is set by the voltage margin calculation unit 17.

Thereby, the motor control device 1 according to the present embodiment sets the voltage margin to be variable according to, for example, the operation state of the motor 10. Therefore, it is possible to more appropriately suppress abnormal sounds and vibration of the motor 10.

In addition, in the present embodiment, the voltage margin is set based on the direct current bus voltage Vdc (refer to Equation (3) described above).

Thereby, in the motor control device 1 according to the present embodiment, the voltage margin is set based on the direct current bus voltage Vdc. Therefore, it is possible to appropriately change and set the voltage margin according to the direct current bus voltage Vdc.

[Second Embodiment]

Next, a motor control device 1a according to a second embodiment will be described with reference to the drawings.

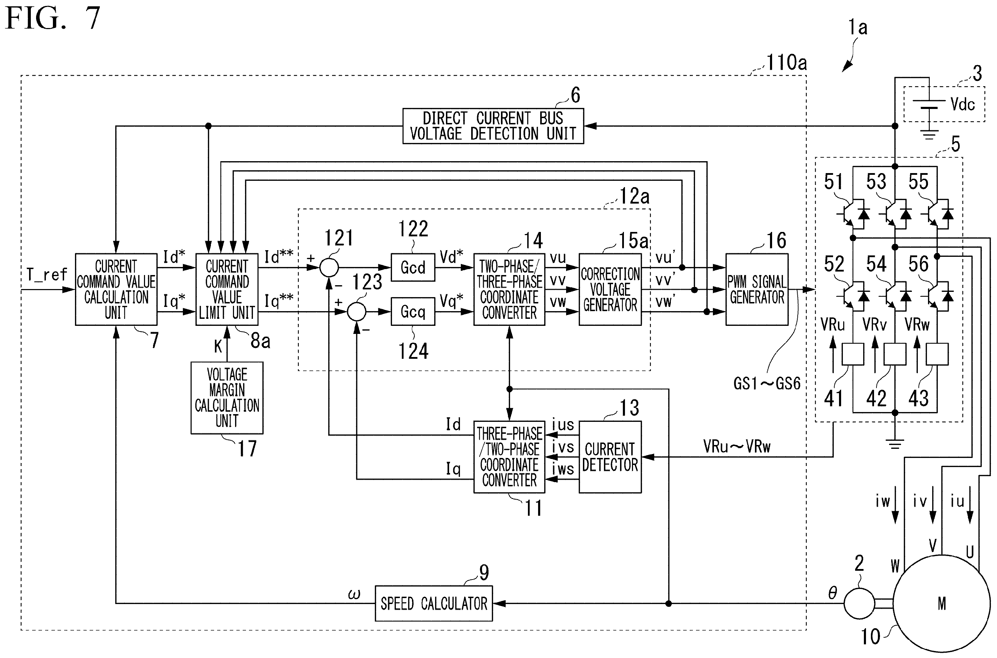

FIG. 7 is a block diagram showing an example of a motor control device 1a according to a second embodiment.

As shown in FIG. 7, the motor control device 1a includes a motor control unit 110a, a motor position detector 2, and an inverter 5. Further, the motor control unit 110a includes a direct current bus voltage detection unit 6, a current command value calculation unit 7, a current command value limit unit 8a, a speed calculator 9, a three-phase/two-phase coordinate converter, a controller 12a, a current detector 13, a PWM signal generator 16, and a voltage margin calculation unit 17.

The present embodiment is different from the first embodiment in that the processing of the current command value limit unit 8a is different and that the controller 12a includes the two-phase/three-phase coordinate converter 14 and the correction voltage generator 15a.

In FIG. 7, the same reference numerals are assigned to the same configurations as those in FIG. 1, and a description thereof will be omitted.

The controller 12a outputs, as voltage command values, phase voltage command values corresponding to each phase of the three-phase windings (U, V, W) of the motor 10. The controller 12a outputs, as phase voltage command values, correction voltage command values (a u-phase correction voltage command value vu', a v-phase correction voltage command value vv', and a w-phase correction voltage command value vw').

In addition, the controller 12a includes a subtractor 121, a subtractor 123, a d-axis controller 122, a q-axis controller 124, a two-phase/three-phase coordinate converter 14, and a correction voltage generator 15a.

The correction voltage generator 15a equally adds an offset voltage Voffset to the three-phase voltage command values including the u-phase voltage command value vu, the v-phase voltage command value vv, and the w-phase voltage command value vw, which are output by the two-phase/three-phase coordinate converter 14, the offset voltage Voffset being for switching to a modulation method capable of improving the voltage utilization ratio by $(2/3^{1/2})$ times. Further, the correction voltage generator 15a generates correction voltage command values (a u-phase correction voltage command value vu', a v-phase correction voltage command value vv', and a w-phase correction voltage command value vw') by equally adding a compensation voltage Vcomp for a certain disturbance voltage to the three-phase voltage command values.

Here, the compensation voltage Vcomp is, for example, a dead-time compensation voltage or a compensation voltage for suppressing a specific-order component.

The correction voltage generator 15a outputs the generated correction voltage command values (the u-phase correction voltage command value vu', the v-phase correction voltage command value vv', and the w-phase correction voltage command value vw') to the PWM signal generator 16.

The current command value limit unit 8a limits the current command values (the d-axis current command value Id* or/and the q-axis current command value Iq*) in the dq coordinate system that are generated by the current command value calculation unit 7 and outputs current limit command values (a limited d-axis current command value Id** or/and a limited q-axis current command value Iq**), which are limited current command values in the dq coordinate system. The current command value limit unit 8a limits the current command values (the limited d-axis current command value Id** and/or the limited q-axis current command value Iq**) in the dq coordinate system such that an operation point having the set voltage margin with respect to the voltage limit circle R1 in the dq coordinate system is obtained, based on, for example, the direct current bus voltage Vdc detected by the direct current bus voltage detection unit 6, the voltage utilization coefficient K output by the voltage margin calculation unit 17, and the correction voltage command values (the u-phase correction voltage command value vu', the v-phase correction voltage command value vv', and the w-phase correction voltage command value vw') obtained from the controller 12a.

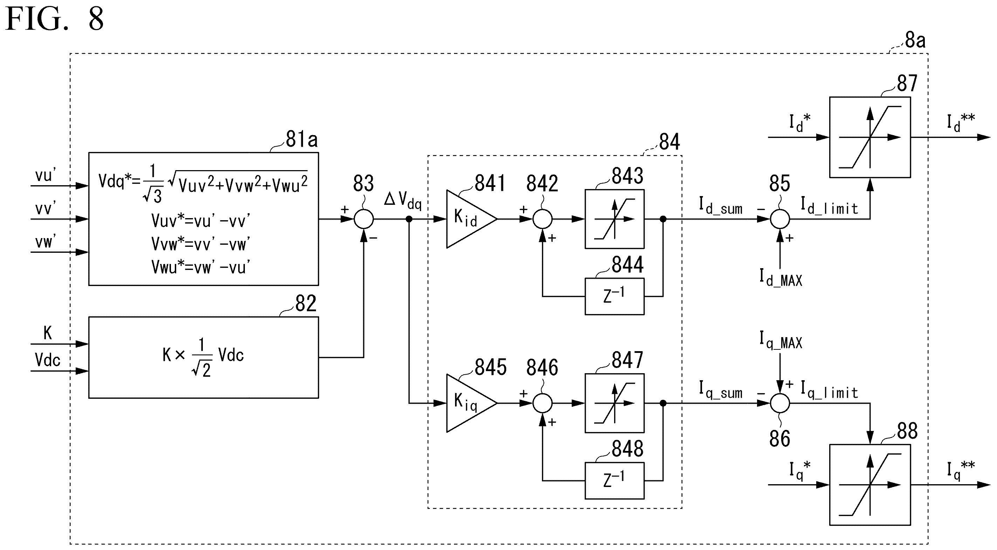

Here, a configuration of the current command value limit unit 8a will be described in detail with reference to FIG. 8.

FIG. 8 is a block diagram showing an example of the current command value limit unit 8a according to the present embodiment.

As shown in FIG. 8, the current command value limit unit 8a includes a dq-axis voltage calculator 81a, a limit voltage calculator 82, subtractors (83, 85, and 86), an integrator 84, a current command value limiter 87, and a current command value limiter 88.

The dq-axis voltage calculator 81a calculates a size Vdq* of a composite voltage vector from the correction voltage command values (the u-phase correction voltage command value vu', the v-phase correction voltage command value vv', and the w-phase correction voltage command value vw'). The size Vdq* of the composite voltage vector is represented by the following Equation (7).

[Math 7]

$$\left.\begin{array}{l} Vdq* = \dfrac{1}{\sqrt{3}}\sqrt{Vuv^2 + Vvw^2 + Vwu^2} \\[2em] Vuv^* = vu' - vv' \\[1em] Vvw^* = vv' - vw' \\[1em] Vwu^* = vw' - vu' \end{array}\right\} \qquad \cdots \ (7)$$

That is, the dq-axis voltage calculator 81a calculates the size Vdq* of the composite voltage vector using Equation (7). The dq-axis voltage calculator 81a outputs the calculated size Vdq* of the composite voltage vector to the subtractor 83.

Since the other components are the same as the components of the current command value limit unit 8 according to the first embodiment, a description thereof will be omitted here.

As described above, in the present embodiment, the controller 12a outputs, as the voltage command values, the phase voltage command values (the u-phase correction voltage command value vu', the v-phase correction voltage command value vv', and the w-phase correction voltage command value vw') corresponding to each phase of the three-phase windings (U, V, W) of the motor 10. The current command value limit unit 8a limits at least one of the d-axis current command value Id* and the q-axis current command value Iq* according to a deviation ΔVdq between a calculated value, which is calculated based on the direct current bus voltage Vdc and the value (the voltage utilization coefficient K) indicating the voltage margin, and the size of a composite voltage vector of interphase voltages, which are calculated based on the phase voltage command values corresponding to each phase (the u-phase correction voltage command value vu', the v-phase correction voltage command value vv', and the w-phase correction voltage command value vw').

Thereby, in the motor control device 1a according to the present embodiment, by using, as the voltage command values, the phase voltage command values (the u-phase correction voltage command value vu', the v-phase correction voltage command value vv', and the w-phase correction voltage command value vw') of each phase, for example, even in a case where a voltage disturbance occurs or a compensation voltage is applied after the two-phase/three-phase coordinate conversion, current command value limit in consideration of an occurrence of a voltage disturbance or application of a compensation voltage can be performed.

[Third Embodiment]

Next, a motor control device 1(1a) according to a third embodiment will be described with reference to the drawings. In the present embodiment, in the motor control devices 1(1a) according to the first and second embodiments, a modification example in which the voltage utilization coefficient K calculated by the voltage margin calculation unit 17 is set to be variable will be described.

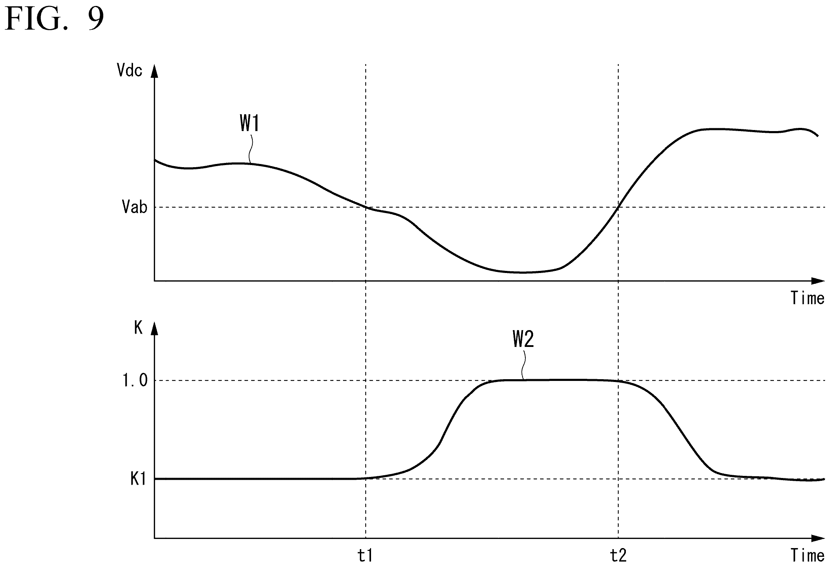

FIG. 9 is a diagram for explaining an operation of the motor control device 1(1a) according to the third embodiment.

In FIG. 9, a waveform W1 indicates a change in the direct current bus voltage Vdc, and a waveform W2 indicates a change in the voltage utilization coefficient K. A horizontal axis of each graph indicates time.

As shown in FIG. 9, the voltage margin calculation unit 17 according to the present embodiment changes the value (the voltage utilization coefficient K) indicating the voltage margin based on the direct current bus voltage Vdc.

For example, at a timing t1 in FIG. 9, in a case where the direct current bus voltage Vdc is lower than an abnormality determination value Vab (in a case where the direct current bus voltage Vdc is equal to or lower than the abnormality determination value Vab), the voltage margin calculation unit 17 smoothly changes the voltage utilization coefficient K from a preset specific value K1 to "1.0".

In a case of changing the voltage utilization coefficient K, in order to smoothly change the voltage margin (the voltage utilization coefficient K), the voltage margin calculation unit 17 provides a transition period and smoothly changes the voltage margin (the voltage utilization coefficient K).

Here, the term "smoothly" does not mean that a discrete value such as "0" or "1" is taken, but means that a value is continuously changed between "0" and "1".

In addition, at a timing t2 in FIG. 9, in a case where the direct current bus voltage Vdc exceeds the abnormality determination value Vab, the voltage margin calculation unit 17 smoothly changes the voltage utilization coefficient K from "1.0" to a preset specific value K1.

As described above, in the present embodiment, the voltage margin calculation unit 17 (the voltage margin setting unit) changes the voltage margin (the voltage utilization coefficient K) based on the direct current bus voltage Vdc.

Thereby, the motor control device 1(1a) according to the present embodiment can appropriately change the voltage margin (the voltage utilization coefficient K) according to the direct current bus voltage Vdc. For example, in a case where the direct current bus voltage Vdc is decreased and an abnormality is detected, the voltage margin calculation unit 17 can substantially disable the operation of the current command value limit unit 8(8a) by changing the voltage utilization coefficient K to "1.0". Therefore, even in a case where the direct current bus voltage Vdc is decreased, it is possible to ensure the motor output.

In addition, in the present embodiment, the voltage margin calculation unit 17 provides a transition period and changes the voltage margin such that the voltage margin is smoothly changed.

Thereby, the motor control device 1(1a) according to the present embodiment can suppress a sudden change in the current limit command values (the limited d-axis current command value Id** and the limited q-axis current command value Iq**) by smoothly changing the voltage utilization coefficient K. Therefore, it is possible to suppress abnormal sounds and vibration of the motor due to a change in the voltage utilization coefficient K.

[Fourth Embodiment]

Next, an electric power steering device 100 according to a fourth embodiment will be described with reference to the drawings.

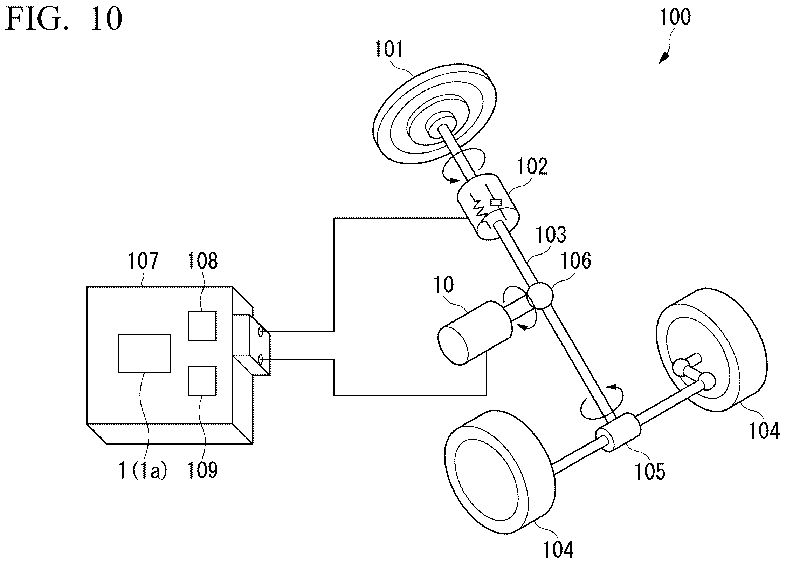

FIG. 10 is a block diagram showing an example of the electric power steering device 100 according to a fourth embodiment.

As shown in FIG. 10, the electric power steering device 100 includes a motor 10, a steering wheel 101, a torque sensor 102, a steering shaft 103, wheels 104, a rack/pinion gear 105, a gear 106, and a control device 107. In addition, the control device 107 includes the motor control device 1(1a) described above, an abnormality detection unit 108, and a vehicle speed information communication device 109.

The torque sensor 102 detects a steering torque of a driver (not shown).

The wheel 104 is, for example, a steering target wheel (for example, a front wheel) of a vehicle such as an automobile.

In the electric power steering device 100, a steering torque applied to the steering wheel 101 from the driver passes through a torsion bar of the torque sensor 102 and the steering shaft 103, and then is transmitted to a rack through the rack/pinion gear 105. Thereby, the electric power steering device 100 steers the wheels 104.

The vehicle speed information communication device 109 measures a vehicle speed and notifies the motor control device 1(1a) of the vehicle speed via a network.

In addition, the motor 10 is driven by the motor control device 1(1a) of the control device 107 and generates an assist force as an output. The assist force is transmitted to the steering shaft 103 via the gear 106 and reduces a steering torque applied by the driver during steering. The control device 107 calculates an assist command for adjusting the assist force based on the steering torque of the driver that is detected by the torque sensor 102 and the vehicle speed. The control device 107 calculates the assist command, for example, as a value proportional to the steering torque of the driver. Further, the control device 107 sets the assist command as a torque command which is a command value of the motor 10.

The abnormality detection unit 108 monitors an abnormality of the electric power steering device 100 (an abnormality in the control of the motor 10) and outputs an abnormality signal to the motor control device 1(1a) in a case where any malfunction is detected. Thereby, the motor control device 1(1a) starts control processing when an abnormality occurs.

In the present embodiment, the voltage margin calculation unit 17 changes the voltage margin according to the detected abnormality in a case where an abnormality in the control of the motor 10 is detected. For example, in a case where the abnormality signal output by the abnormality detection unit 108 is received, the voltage margin calculation unit 17 changes the voltage utilization coefficient K to "1.0".

In addition, the voltage margin calculation unit 17 according to the present embodiment changes the voltage margin according to the vehicle speed of the vehicle on which the motor control device 1(1a) is mounted. For example, in a case where the vehicle speed received by the vehicle speed information communication device 109 exceeds a predetermined specific vehicle speed, the voltage margin calculation unit 17 changes the voltage utilization coefficient K to "1.0". In addition, for example, in a case where the vehicle speed received by the vehicle speed information communication device 109 does not exceed a predetermined specific vehicle speed, the voltage margin calculation unit 17 changes the voltage utilization coefficient K to a specific value.

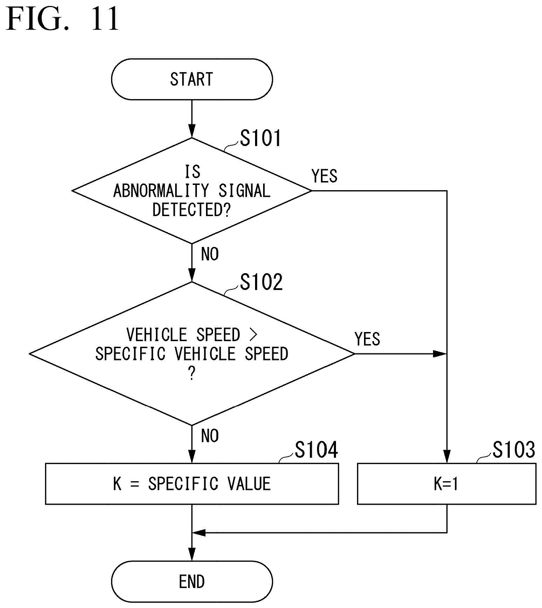

Next, an operation of the electric power steering device 100 according to the present embodiment will be described with reference to FIG. 11.

In FIG. 11, an example of an operation of the voltage margin calculation unit 17 of the electric power steering device 100 will be described. It is assumed that the processing shown in FIG. 11 is periodically executed.

In FIG. 11, the voltage margin calculation unit 17 according to the present embodiment first determines whether or not an abnormality signal is detected (step S101). The voltage margin calculation unit 17 determines whether or not an abnormality signal is detected by determining whether or not the abnormality signal output by the abnormality detection unit 108 is received. In a case where an abnormality signal is detected (YES in step S101), the voltage margin calculation unit 17 proceeds to processing of step S103. Further, in a case where an abnormality signal is not detected (NO in step S101), the voltage margin calculation unit 17 proceeds to processing of step S102.

In step S102, the voltage margin calculation unit 17 determines whether or not the vehicle speed exceeds a specific vehicle speed. The voltage margin calculation unit 17 determines whether or not the vehicle speed received from the vehicle speed information communication device 109 exceeds a specific vehicle speed. In a case where the vehicle speed exceeds the specific vehicle speed (YES in step S102), the voltage margin calculation unit 17 proceeds to processing of step S103. In addition, in a case where the vehicle speed is equal to or lower than the specific vehicle speed (NO in step S102), the voltage margin calculation unit 17 proceeds to processing of step S104.

In step S103, the voltage margin calculation unit 17 changes the voltage utilization coefficient K to "1.0" (K = 1.0). After processing of step S103, the voltage margin calculation unit 17 ends the processing.

In step S104, the voltage margin calculation unit 17 changes the voltage utilization coefficient K to a specific value (K = specific value). After processing of step S104, the voltage margin calculation unit 17 ends the processing.

As described above, the electric power steering device 100 according to the present embodiment includes the motor control device 1(1a) described above, the motor 10, and the torque sensor 102. The motor 10 assists steering of the steering. The torque sensor 102 detects a steering torque of the steering. The motor control device 1(1a) controls the motor 10 by using, as a command value of the motor 10, an assist command of the steering corresponding to the steering torque detected by the torque sensor 102.

Thereby, the electric power steering device 100 according to the present embodiment has the same effect as the motor control device 1(1a), and even in a case where a voltage disturbance occurs at an operation point in the vicinity of the limited current command value, it is possible to suppress abnormal sounds and vibration of the motor due to the voltage disturbance.

Further, in the present embodiment, the voltage margin calculation unit 17 changes the voltage margin (the voltage utilization coefficient K) according to the detected abnormality in a case where an abnormality in the control of the motor 10 is detected. For example, in a case where an abnormality is detected, the voltage margin calculation unit 17 changes the voltage margin by changing the voltage utilization coefficient K to "1.0".

Thereby, the electric power steering device 100 (the motor control device 1 (1a)) according to the present embodiment can appropriately respond to a case where an abnormality in the control of the motor 10 occurs. For example, in a case where an abnormality is detected, the electric power steering device 100 (the motor control device 1(1a)) can disable the current command value limit by changing the voltage utilization coefficient K to "1.0" in order to continually output the assist torque according to the steering torque as long as possible. Thereby, the electric power steering device 100 according to the present embodiment can suppress a decrease in the motor output due to any malfunction and can secure the motor output even in a case where an abnormality occurs.

In addition, in the present embodiment, the voltage margin calculation unit 17 changes the voltage margin according to the vehicle speed of the vehicle on which the motor control device 1(1a) is mounted. For example, in a case where the vehicle speed exceeds a specific vehicle speed, the voltage margin calculation unit 17 changes the voltage margin by changing the voltage utilization coefficient K to "1.0". In addition, for example, in a case where the vehicle speed is equal to or lower than a specific vehicle speed, the voltage margin calculation unit 17 changes the voltage margin by changing the voltage utilization coefficient K to a specific value (a value smaller than 1.0).

Thereby, the electric power steering device 100 (the motor control device 1 (1a)) according to the present embodiment can secure the voltage margin by changing the voltage utilization coefficient K. Therefore, it is also possible to suppress abnormal sounds and vibration of the motor 10. For example, in a case where the vehicle is traveling at a high speed, that is, in a case where the vehicle speed is high, the electric power steering device 100 (the motor control device 1(1a)) according to the present embodiment changes the voltage utilization coefficient K to enable emergency avoidance, to maximize the motor output, and to eliminate the voltage margin. Therefore, it is possible to secure the motor output.

The present disclosure is not limited to each of the above-described embodiments and can be modified without departing from the spirit and scope of the present disclosure.

Each of the above-described embodiments may be implemented alone, and some or all of the above-described embodiments may be implemented in combination.

In each of the above-described embodiments, an example in which the integrator 84 is used has been described. On the other hand, the present disclosure is not limited thereto. Instead of the integrator 84, a proportional calculator, a differential calculator, or the like may be used, or at least one or more calculators of a proportional calculator, an integrator, and a differential calculator may be used.

In the third embodiment, in the present embodiment, an example in which the direct current bus voltage Vdc is used for abnormality detection has been described. On the other hand, the present disclosure is not limited thereto, and the voltage utilization coefficient K may be changed based on another parameter used in the motor control.

In the fourth embodiment, an example in which the voltage utilization coefficient K is changed based on the abnormality signal and the vehicle speed has been described. On the other hand, the present disclosure is not limited thereto. The voltage utilization coefficient K may be changed based on, for example, a signal used in other electric power steering, that is, a steering state of the driver, for example, a steering torque Ts, a steering speed calculated from the rotation speed of the motor 10, and the like. In addition, as an example of a traveling state, states indicating stop and traveling are used. On the other hand, traveling states other than the states, for example, a yaw rate indicating a turning state, a lateral acceleration signal, and the like may be used.

Each configuration of the motor control device 1(1a) described above includes a computer system therein. Moreover, a program for implementing functions of each configuration provided in the motor control device 1(1a) described above may be recorded on a computer-readable recording medium. In this case, by causing the computer system to read and execute the program recorded on the recording medium, processing in each configuration provided in the motor control device 1(1a) described above may be performed. Here, "causing the computer system to read and execute the program recorded on the recording medium" includes installing the program on the computer system. Here, the "computer system" mentioned here includes an operating system (OS) and hardware such as a peripheral device.

In addition, the "computer system" may include a plurality of computer devices connected via a network including a communication line such as the Internet, a WAN, a LAN, and a dedicated line. Further, the "computer-readable recording medium" refers to a portable medium such as a flexible disk, a magneto-optical disk, a ROM, and a CD-ROM, and a storage device such as a hard disk built in the computer system. As described above, the recording medium on which the program is stored may be a non-transitory recording medium such as a CD-ROM.

In addition, the recording medium also includes an internal or external recording medium that is accessible by a distribution server to distribute the program. The program may be divided into a plurality of parts. Each part may be downloaded at a different timing and then combined into each component of the motor control device 1(1a), or each part of the divided program may be distributed by a different distribution server. Further, the "computer-readable recording medium" also includes a medium that holds the program for a certain period of time, such as a volatile memory (RAM) inside the computer system that serves as a server or a client in a case where the program is transmitted via a network. In addition, the program may be a program for implementing some of the functions described above. Furthermore, the program may be a so-called difference file (difference program) capable of implementing the functions described above in combination with a program that has already been recorded on the computer system.

REFERENCE SIGNS LIST

1, 1a Motor control device
2 Motor position detector
3 Direct current power supply
5 Inverter
6 Direct current bus voltage detection unit
7 Current command value calculation unit
8, 8a Current command value limit unit
9 Speed calculator
10 Motor
11 Three-phase/two-phase coordinate converter
12, 12a Controller
13 Current detector
14 Two-phase/three-phase converter
15, 15a Correction voltage generator
16 PWM signal generator
17 Voltage margin calculator
41, 42, 43 Shunt resistor
51, 52, 53, 54, 55, 56 Switching element
81, 81a dq-axis voltage calculator
82 Limit voltage calculator
83, 85, 86, 121, 123 Subtractor
84 Integrator
87, 88 Current command value limiter
100 Electric power steering device
101 Steering wheel
102 Torque sensor
103 Steering shaft
104 Wheel
105 Rack/pinion gear
106 Gear
107 Control device
108 Abnormality detection unit
109 Vehicle speed information communication device
110 Motor control unit
122 d-axis controller
124 q-axis controller
841, 845 Amplifier
842, 846 Adder
843, 847 Current limiter
844, 848 Delay element

**Claims**

1. A motor control device that controls energization of a motor by vector control, the motor control device comprising:

   a current command value calculation unit configured to generate current command values in a dq coordinate system based on a command value of a motor;
   a current command value limit unit configured to limit the current command values in the dq coordinate system which are generated by the current command value calculation unit and output current limit command values which are the limited current command values in the dq coordinate system; and
   a controller configured to calculate voltage command values for the motor by feedback control of the current limit command values, wherein
   the current command value limit unit is configured to limit the current command values in the dq coordinate system such that an operation point having a set voltage margin with respect to a voltage limit circle in the dq coordinate system is obtained based on a direct current bus voltage and the voltage command values.

2. The motor control device according to Claim 1, further comprising:

a direct current bus voltage detection unit configured to detect the direct current bus voltage, wherein
the current command values in the dq coordinate system include a d-axis current command value and a q-axis current command value, and
the current command value limit unit is configured to limit at least one of the d-axis current command value and the q-axis current command value such that the operation point having the voltage margin with respect to the voltage limit circle is obtained, based on the direct current bus voltage detected by the direct current bus voltage detection unit and the voltage command values.

3. The motor control device according to Claim 2, wherein

the controller is configured to output, as the voltage command values, voltage command values in the dq coordinate system, and
the current command value limit unit is configured to limit at least one of the d-axis current command value and the q-axis current command value according to a deviation between a calculated value, which is calculated based on the direct current bus voltage and a value indicating the voltage margin, and a size of a voltage vector indicated by the voltage command values in the dq coordinate system.

4. The motor control device according to Claim 2, wherein

the controller is configured to output, as the voltage command values, phase voltage command values corresponding to each phase of three phases of the motor, and
the current command value limit unit is configured to limit at least one of the d-axis current command value and the q-axis current command value according to a deviation between a calculated value, which is calculated based on the direct current bus voltage and a value indicating the voltage margin, and a size of a composite voltage vector of interphase voltages, which are calculated based on the phase voltage command values corresponding to each phase.

5. The motor control device according to Claim 3 or 4, wherein
the current command value limit unit is configured to limit at least one of the d-axis current command value and the q-axis current command value according to an integration value of the deviation.

6. The motor control device according to any one of Claims 1 to 5, further comprising:

a voltage margin setting unit configured to set the voltage margin to be variable, wherein
the current command value limit unit is configured to limit the current command values in the dq coordinate system based on the voltage margin which is set by the voltage margin setting unit.

7. The motor control device according to Claim 6, wherein
the voltage margin setting unit is configured to provide a transition period and changes the voltage margin such that the voltage margin is smoothly changed.

8. The motor control device according to Claim 6 or 7, wherein
in a case where an abnormality in control of the motor is detected, the voltage margin setting unit is configured to change the voltage margin according to the detected abnormality.

9. The motor control device according to any one of Claims 6 to 8, wherein
the voltage margin setting unit is configured to change the voltage margin according to a speed of a vehicle on which the motor control device is mounted.

10. The motor control device according to any one of Claims 1 to 9, wherein
the voltage margin is set based on a direct current bus voltage.

11. An electric power steering device comprising:

the motor control device according to any one of Claims 1 to 10;
the motor configured to assist steering of steering; and
a torque sensor configured to detect a steering torque of the steering, wherein
the motor control device is configured to control the motor by using, as a command value of the motor, an assist command of the steering that corresponds to the steering torque detected by the torque sensor.

# FIG. 1

EP 4 607 786 A1

# FIG. 2

EP 4 607 786 A1

FIG. 3

EP 4 607 786 A1

FIG. 4

# FIG. 5

EP 4 607 786 A1

FIG. 6

FIG. 7

EP 4 607 786 A1

FIG. 8

EP 4 607 786 A1

FIG. 9

EP 4 607 786 A1

FIG. 10

EP 4 607 786 A1

# FIG. 11

```
        ┌─────────────┐
        │    START    │
        └─────────────┘
               │
               ▼           S101
            ╱──────────╲
           ╱     IS      ╲        YES
          ╱ ABNORMALITY   ╲──────────────┐
          ╲   SIGNAL      ╱               │
           ╲ DETECTED?   ╱                │
            ╲──────────╱                  │
               │ NO                       │
               ▼           S102           │
            ╱──────────╲                  │
           ╱            ╲       YES        │
          ╱ VEHICLE SPEED >╲──────────────┤
          ╲ SPECIFIC VEHICLE╱             │
           ╲  SPEED ?     ╱               │
            ╲──────────╱                  │
               │ NO                       │
               ▼        S104              ▼            S103
    ┌───────────────────────┐   ┌───────────────────────┐
    │  K = SPECIFIC VALUE   │   │         K=1           │
    └───────────────────────┘   └───────────────────────┘
               │                           │
               │◄──────────────────────────┘
               ▼
        ┌─────────────┐
        │     END     │
        └─────────────┘
```

## INTERNATIONAL SEARCH REPORT

International application No.

**PCT/JP2022/039025**

### A. CLASSIFICATION OF SUBJECT MATTER

*H02P 21/22*(2016.01)i
FI:  H02P21/22

According to International Patent Classification (IPC) or to both national classification and IPC

### B. FIELDS SEARCHED

Minimum documentation searched (classification system followed by classification symbols)

H02P21/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/234971 A1 (MITSUBISHI ELECTRIC CORP) 26 November 2020 (2020-11-26) paragraphs [0010]-[0109], fig. 1-22 | 1-3, 5-11 |
| A | | 4 |
| Y | JP 8-266099 A (MATSUSHITA ELECTRIC IND CO LTD) 11 October 1996 (1996-10-11) fig. 2 | 1-3, 5-11 |
| A | | 4 |
| Y | JP 2001-186790 A (MITSUBISHI ELECTRIC CORP) 06 July 2001 (2001-07-06) paragraphs [0001], [0016]-[0019], [0023] | 6-11 |
| Y | JP 2009-213336 A (NISSAN MOTOR CO LTD) 17 September 2009 (2009-09-17) paragraph [0006] | 8-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/039025**

| Patent document cited in search report | | | Publication date (day/month/year) | Patent family member(s) | | | Publication date (day/month/year) |
|---|---|---|---|---|---|---|---|
| WO | 2020/234971 | A1 | 26 November 2020 | US 2022/0200498 A1 paragraphs [0036]-[0123], fig. 1-22 | | | |
| | | | | GB | 2596979 | A | |
| | | | | CN | 113841331 | A | |
| JP | 8-266099 | A | 11 October 1996 | US 5652495 A fig. 2 | | | |
| JP | 2001-186790 | A | 06 July 2001 | (Family: none) | | | |
| JP | 2009-213336 | A | 17 September 2009 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6260502 B